# EUROPEAN PATENT SPECIFICATION

(11) **EP 2 561 763 B1**
(45) Date of publication and mention of the grant of the patent: **05.08.2020**
(21) Application number: 10850287.3
(22) Date of filing: 23.04.2010
(51) Int. Cl.: A23D 7/00, A23D 7/04, C11B 7/00, C11B 3/12, C11C 3/10, A23G 1/38, A23D 9/04

(54) **METHOD OF MANUFACTURING HARD BUTTER SIMILAR TO CACAO BUTTER**
VERFAHREN ZUR HERSTELLUNG VON KAKAOBUTTERÄHNLICHER HARTBUTTER
PROCÉDÉ DE FABRICATION DE BEURRE DUR SIMILAIRE AU BEURRE DE CACAO

(30) Priority: 22.04.2010 KR 20100037534
(43) Date of publication of application: 27.02.2013
(73) Proprietor: CJ CheilJedang Corporation, Jung-gu Seoul 100-749 (KR)
(72) Inventor: KANG, Ji Hyun, Seoul 157-773 (KR); KIM, Mi Jung, Seongnam-si Gyeonggi-do 462-836 (KR); LEE, Yun Jeong, Incheon 402-201 (KR); KIM, Yun Sik, Jung-gu Seoul 100-400 (KR); LEE, Sang Bum, Seoul 152-773 (KR); PARK, Seung Won, Yongin-si Gyeonggi-do 446-727 (KR)
(74) Representative: Bosch Jehle Patentanwaltsgesellschaft mbH
(86) International application number: PCT/KR2010/002547
(87) International publication number: WO 2011/132804

(56) References cited:
- EP-A1- 2 404 985
- EP-A1- 2 404 986
- WO-A1-2009/031680
- JP-A- 6 062 876
- JP-A- S6 317 697
- JP-A- 2008 161 176
- JP-B2- 4 335 306
- KR-A- 20070 085 583
- Ibrahim O Mohamed ET AL: "Enzymatic Synthesis of Cocoa Butter Equivalent from Olive Oil and Palmitic-Stearic Fatty Acid Mixture", Applied Biochemistry and Biotechnology, 1 August 2009 (2009-08-01), pages 757-769, XP055556968, Boston DOI: 10.1007/s12010-014-1312-5 Retrieved from the Internet: URL:http://seafast.ipb.ac.id/publication/j ournal/enzymatic-interesterification-of-pa lm-oil-midfraction-blends-for-the-producti on-of-cocoa-butter.pdf [retrieved on 2019-02-14]

## Description

### [Technical Field]

The present invention relates to a method of preparing a cocoa butter equivalent through enzymatic transesterification, and more particularly, to a method of preparing fat containing a high content of POS, which includes mixing a fractionized vegetable fat with fatty acid and a fatty acid derivative to prepare a raw material fat, subjecting the raw material fat to enzymatic transesterification, removing a crystallized fraction obtained through fractionation of the enzymatically transesterified raw material fat, and removing the fatty acid and the fatty acid derivative from the fractionized fat, and a cocoa butter equivalent including the fat.

### [Background Art]

### 1. Cocoa butter

Cocoa butter (cacao butter) is fat obtained from the seed (cacao bean, fat content: 48 to 49%) of theobroma cacao fruit. Cocoa butter consists of 98% of triglyceride, 1% of free fatty acid, 0.5% of monoglyceride or diglyceride, 0.2% of sterol, and 150 to 250 ppm of tocopherol. Triglyceride of cocoa butter has a structure which is 75% or higher symmetrical and in which oleic acid is located at the sn-2 position and palmitic acid and stearic acid are located at the sn-1 and sn-3 positions, respectively. Cocoa butter includes 34 to 49% of POS, 23 to 30% of SOS, and 13 to 17% of POP, which mainly form a symmetrical structure.

Cocoa butter has a melting point of 32 to 35°C and a solid fat content (SFC) of 71 to 88% at room temperature (about 20°C), starts melting at 30 to 32°C, and substantially melts at 32 to 35°C. Since cocoa butter rapidly melts at around 30°C, cocoa butter is solid at room temperature, whereas it quickly melts in the mouth and thus provides a refreshing and neat mouth-feel. It is known that such melting characteristics of cocoa butter are due to the symmetrical structure.

### 2. Replacement fats for cacao butter

Since cocoa butter is obtained from a natural plant, supply thereof changes according to weather changes. Further, since cocoa butter is expensive, vegetable fat and oil are used for chocolate as a substitute for cocoa butter. Such substitute fats include hardened palm kernel oil and coconut oil, which are not compatible with cocoa butter. Substitute fat and oil for cocoa butter is classified into three types, i.e., a cocoa butter equivalent and extender (CBE), a cocoa butter replacer (CBR), and a cocoa butter substitute (CBS) depending on production methods and constituents.

CBE is compatible with cocoa butter, has a similar triglyceride composition to cocoa butter, and requires tempering. Examples of natural CBE include exotic fats such as a palm middle fraction (PMF), Sal fat, Borneo tallow, Kokum, Shea butter and the like. CBE is generally used alone, as a fraction thereof, or in suitable combination thereof.

However, since Sal fat, Shea butter, Borneo tallow, kokum oil and the like are not derived from plant fruits and are collected in wild, supply and price thereof are highly variable and, in the worst case, a problem in that required amounts cannot be secured occurs.

CBE can be prepared by synthesizing SOS-rich fat through enzymatic transesterification and mixing the SOS-rich fat with a palm mid-fraction (PMF) obtained by fractionation of palm oil in a ratio of about 1:1. A CBE generally has a triglyceride composition consisting of 30 to 35% of POP, 10 to 15% of POS, and 30 to 35% of SOS, which has a higher content of POP and SOS and a lower content of POS than the triglyceride composition of Ghanaian cocoa butter (POP: 17%, POS: 43% SOS: 26%).

Comparing the SFC of cocoa butter with that of the CBE, the CBE having a high SOS content has a lower SFC at 30°C or more than the cocoa butter. However, the CBE having a high SOS content has a higher SFC at 30°C or less than cocoa butter, and thus has a solid feel and leaves a substantial aftertaste in the mouth. As described above, difference in SFC between the cocoa butter and the CBE, *i.e.* property difference, is due to difference in triglyceride composition between the cocoa butter and the CBE. The CBE has a high content of POP and SOS, whereas the cocoa butter has a high POS content. POS and POP have melting points around 35°C, while SOS has a melting point of 41°C. Fat having a high SOS content is relatively hard at 30°C or more (Aleksandra Torbica et al., Eur. Food Res Technol., 2006, 222:385-391).

Recently, there is a trend toward chocolate which is soft rather than hard and quickly melts in the mouth without leaving an aftertaste. Accordingly, a soft CBE which has decreased SOS content and increased PMF content has been developed. The soft CBE has a triglyceride composition including 40 to 45% of POP, 10 to 15% of POS, and 30 to 35% of SOS. The soft CBE has a low SFC overall in a temperature range of 20 to 35°C, and thus it can provide soft-texture chocolate but does not form solid crystals at room temperature, which may cause a blooming phenomenon.

Most currently available CBEs may have hard or soft properties by adjusting a mixed ratio between SOS obtained through synthesis or fractionation and PMF having a high POP content. However, the CBEs do not exhibit an SFC curve having a steep slope, unlike natural cocoa butter.

Patent Document 1 discloses a substitute composition for cocoa butter which includes SOS, POS, and POP and has a high SOS content, in which the ratio of stearic acid to palmitic acid is 1.5:1 to 6.0:1.

Patent Document 2 discloses fat having a triglyceride composition with a high POS content, produced by transesterification, wherein POS content is low, 18% by weight (wt%) or less, whereas POP content is high, 10 to 55 wt%, and SOS content is high, 10 to 50 wt%. In this respect, the process focuses on synthesizing SOS rather than POS.

Patent Document 3 discloses fat and oil for chocolate having proper heat resistance and meltability in the mouth, wherein the fat and oil has an SOS content of 40 to 60 wt%, a POP content of 1 to 10 wt%, and a weight ratio of SOS content/the sum of POS and SOA contents of 1.1 to 1.8, and the SOS content is greater than the sum of the POS and SOA contents. Thus, the fat and oil includes a high SOS content.

Patent Document 4 (EP 2 213 712 A1) discloses a method of producing triglycerides rich in XOX fat, which comprises the steps of heating and dissolving triglycerides (XOX fat) which comprise 20 to 60 mass % of a triglyceride having a saturated fatty acid residue on each of the first and third positions and an oleoyl group on the second position in total triglycerides in the presence of 1 to 30 mass % of a fatty acid lower alkyl ester and then cooling the mixture to precipitate crystals and conducting solid-liquid separation.

The conventional methods focus on fat and oil for chocolate having a high SOS content in order to produce chocolate products that exhibit superior workability and are free of variation in conventional processes, when mixed with natural cocoa butter in the production of chocolates, whereas they do not put emphasis on POS abundant in natural cocoa butter.

Thus, the inventors of the present invention have conducted extensive studies to develop hard butter which is soft and exhibits excellent meltability in the mouth, like natural cocoa butter used for high-quality chocolates, and is absolutely free of a workability problem encountered in the production of conventional chocolate products. As a result, the inventors prepared fat having a high content of POS that is abundant in natural cocoa butter and discovered that the fat is useful for chocolate and confectionery. The present invention was completed based on this discovery.
[Patent Document 1] US Patent No. 4,705,692
[Patent Document 2] Japanese Patent Publication No. 1999-243982
[Patent Document 3] Japanese Patent Publication No. 2008-154555
[Patent Document 4] EP 2 213 712 A1

### [Disclosure]

### [Technical Problem]

One aspect is to provide a method of preparing fat having a high content of 1-palmitoyl-2-oleyl-3-stearoyl glycerol,_POS from vegetable fat.

Another aspect is to provide a cocoa butter equivalent (CBE) that is freshly melted in the mouth while maintaining soft texture like natural cocoa butter, and does not cause a blooming phenomenon by solving problems of conventional soft CBE such as slight hard texture, serious aftertaste, and occurrence of blooming at room temperature.

### [Technical Solution]

The foregoing aspects of the present invention are achieved by preparing fat having a high POS content by enzymatic transesterification of vegetable fat and removing fractions having a high melting point through analysis of the triglyceride structure and melting point of the fat to thereby produce fat having a POS content of 50% or higher.

The present invention provides a method of preparing fat including:
subjecting a raw material fat obtained by mixing palm oil or a fraction thereof containing 40 to 85 wt% of 1-palmitoyl-2-oleyl-3-palmitoyl glycerol, POP, with stearic acid and a stearic acid derivative at a molar ratio of 1:0.5 to 1:10 to enzymatic transesterification; wherein the enzymatic transesterification is carried out at 30 to 60°C using an enzyme extracted from Mucor miehei or Thermomyces lanuginosus;removing a crystallized fraction obtained through single fractionation from the enzymatically transesterified fat, wherein removing the crystallized fraction comprises maintaining the fat solution, from which the stearic acid and the stearic acid derivative are not removed, at 0 to 40°C for 1 to 48 hours after enzymatic transesterification to separate a solid phase and a liquid phase, and removing the solid phase; and, removing the stearic acid and the stearic acid derivative from the fractionized fat.

This preparation method is implemented through a simpler process than a conventional method in which fatty acid and a fatty acid derivative are removed after synthesis, has higher fractionation efficiency than general dry fractionation excluding solvent addition, and is more advantageous in terms of equipment and safety by elimination of solvent addition than solvent fractionation performed by adding a solvent to improve fractionation efficiency.

A process of fractionating vegetable fat or oil is to obtain a POP containing fat having content difference in saturated fatty acids and unsaturated fatty acids from vegetable fat or oil raw materials and may be conducted by a method selected from dry fractionation and solvent fractionation depending on characteristics of the vegetable fat or oil raw materials. In solvent fractionation, any solvent, e.g., hexane, acetone, methyl ethyl ketone, ethanol, or the like, may be used as long as it can dissolve raw material fat.

In the present invention, enzymatic transesterification is used to produce triglyceride including saturated fatty acids in the sn-1,3 positions and unsaturated acid in the sn-2 position and is conducted at 30 to 60°C preferably for 1 to 30 hours using an sn-1,3 position-specific enzyme. Enzymes extracted from Mucor miehei or Thermomyces lanuginosus are used.

The present invention adopts a method for fractionizing enzymatically transesterified fat, without using general dry fractionation or solvent fractionation as descried above. This method is accomplished by fractionizing fat containing fatty acid and a fatty acid derivative without any treatment after enzymatic transesterification. In this method, fractionation may be carried out at a higher cooling medium temperature than general dry fractionation. Accordingly, hard butter may be prepared within a short process time at high yield and low preparation costs.

In fractionation of the present invention, a fat solution containing fatty acid and a fatty acid derivative is left at 0 to 40 °C for 1 to 48 hours until it crystallized. When crystallization is sufficiently realized, a fraction having a high melting point may be separated from a liquid fat through reduction in pressure or through a filter press manner. Such fractionation may be performed once or more. In the present invention, fractionation is performed once, thereby obtaining fat having a high content of POS, which contains 2 wt% or less of a high-melting point fat having saturated fatty acid at a 2-position in a triglyceride structure and 50 wt% or higher of POS.

The fractionized fat may be distilled at 0.001 to 30 mbar and at 100 to 300°C, preferably at 0.001 to 10 mbar and at 150 to 250°C to remove the fatty acid and the fatty acid derivative. Through the process of removing the fatty acid and the fatty acid derivative after transesterification and fractionation, 99% of triglyceride may be obtained, thereby producing a uniform product as compared with POS fat obtained through fractionation of natural fat. Further, byproducts generated during enzymatic transesterification and distillation may be recycled as substrates in enzymatic transesterification, thereby achieving cost efficiency.

### [Advantageous Effects]

The method of preparing fat having a high content of POS according to the present invention provides high fractionation yield, low equipment cost and excellent workability, and guarantees high safety by elimination of use of a volatile solvent which is used for general solvent fractionation, as compared with a conventional method in which fatty acid and a fatty acid derivative are removed by distillation after enzymatic transesterification.

Fat having a high POS content obtained by a method according to the present invention may be mixed with vegetable fat or a fraction thereof, e.g., a hard PMF and Sal fat, thereby providing similar physical properties to cocoa butter.

Accordingly, as compared with conventional cocoa butter equivalent and extender (CBE), the fat according to the present invention has an increased POS ratio so as to improve physical properties and provide blooming resistance of chocolate while enhancing commercial value, and may replace natural cocoa butter at 1:1 since it has the same composition as the natural cocoa butter.

### [Description of Drawings]

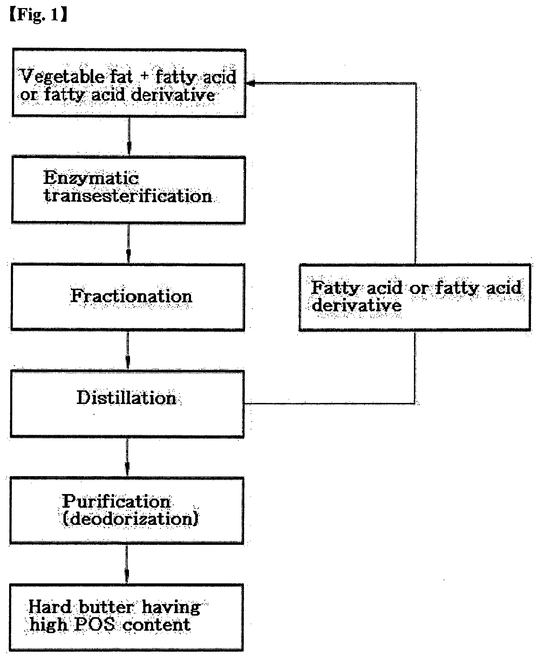

Fig. 1 is a flowchart of an overall process of a method of preparing fat according to the present invention;
Fig. 2 is a flowchart of fractionation of palm oil in fractionation of a raw material fat; and
Fig. 3 is a graph showing an analysis result of triglyceride composition of a product obtained through enzymatic transesterification.

### [Mode for Invention]

Next, the present invention will be described in more detail with reference to the following examples. These examples are provided for illustrative purposes only and are not to be in any way construed as limiting the present invention.

### Example 1: Fractionation of raw material fat

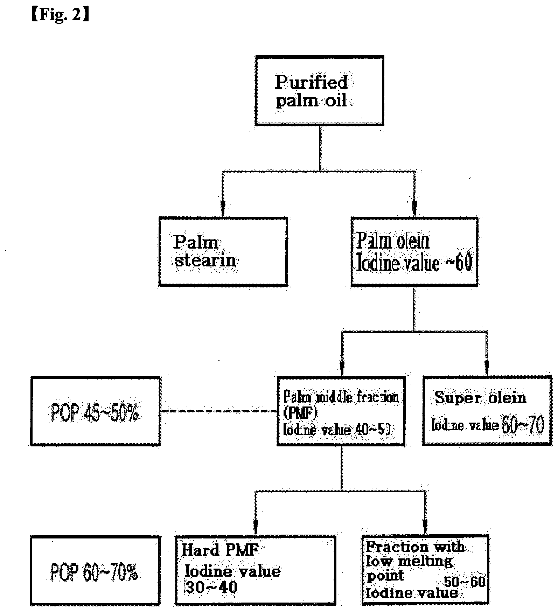

In this example, a POP containing fat was obtained using vegetable fat as a raw material by solvent fractionation and dry fractionation (see Fig. 2).

First, in solvent fractionation, 1 kg of palm oil was completely dissolved at 60°C and mixed with 10 kg of acetone. After the container was closed with a stopper, the mixture was stirred so that the oil was thoroughly dissolved in acetone. The mixed solution was stirred at 0°C and 30 rpm for 3 hours and then crystallized, followed by vacuum filtration, thereby separating into solid palm stearin and liquid palm olein. Here, the palm olein had a yield of 60% or more and an iodine value of 60 or less.

The acetone-unremoved palm stearin obtained through fractionation was completely dissolved at 40°C and acetone was further added thereto. The mixture was stirred at 30°C and at 30 rpm and then crystallized, followed by vacuum filtration, thereby separating into a crystallized fraction and a palm middle fraction (PMF). Here, the PMF had a yield of 30% or higher, contained 55% of POP, and had an iodine value of 40.

In dry fractionation, 1 kg of palm oil was completely dissolved at 60°C and stirred at 25°C and 30 rpm for 30 hours and then crystallized, followed by vacuum filtration, thereby separating into palm stearin in a solid state and palm olein in a liquid state. Here, the palm olein had a yield of 75% and an iodine value of 60 or less.

The palm olein obtained through fractionation was completely dissolved at 60°C and stirred at 15°C and 30 rpm for 25 hours and then crystallized, followed by vacuum filtration, thereby separating into solid PMF and liquid super olein. Here, the PMF had a yield of 55% and a POP containing fat having an iodine value of 50 was obtained.

### Example 2: Enzymatic transesterification

In this example, the POP-containing fat prepared in Example 1 was mixed with stearic acid and a stearic acid derivative at a ratio of 1:5.

During enzymatic transesterification, fat containing palm oil or a fraction thereof containing 40 to 85 wt% of POP or 25 to 50 wt% of POO, exotic fat or a fraction thereof containing 30 to 60 wt% of SOO, or a sunflower oil containing 65 to 90 wt% of OOO could be used instead of the POP-containing fat prepared in Example 1.

The mixture was mixed with an enzyme extracted from Mucor miehei and Thermomyces lanuginosus, followed by transesterification in a reactor equipped with a stirrer (stirring transesterification). Separately from the stirring transesterification, the raw material mixture was subjected to transesterification by continuously passing through a double jacket-type column filled with an enzyme (continuous transesterification). Here, the reaction was conducted at a constant temperature of 50°C. Accordingly, fat having a POS content of 50% or higher was obtained.

### Experimental Example 1: Analysis of triglyceride structure

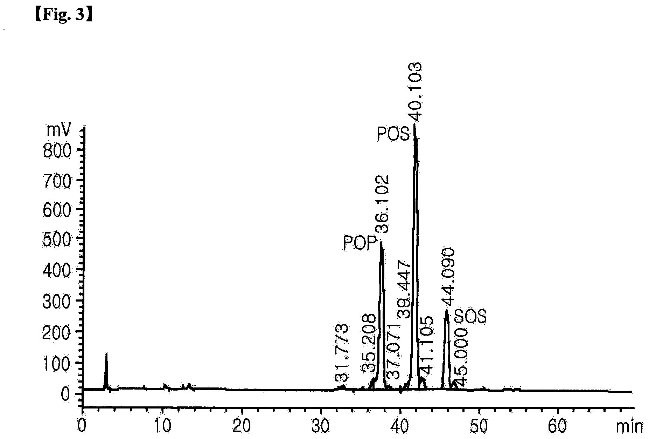

The fats obtained by stirring transesterification and continuous transesterification in Example 2 were evaluated as to composition and triglyceride content (see Fig. 3 and Table 2)

The compositions and contents of triglyceride were analyzed using high performance liquid chromatography (HPLC). Analysis was conducted under conditions listed in Table 1. The triglyceride structures of the fats before and after fractionation were analyzed using reverse-phase high-performance liquid chromatography and an evaporative light scattering detector (ELSD). 30 µl of a sample and 10 ml of hexane were filtered using a PEFE syringe filter (25 mm, 0.2 µm) and then put in a 2-ml vial, and 20 µl of the sample was injected using an autosampler. Acetonitrile and hexane/isopropanol were used as a solvent A and a solvent B, respectively, and a flow rate was 0.72 ml/min. Solvent gradient elution (A:B, v:v) was performed at 70:30 for 25 minutes, and a gradient solvent system was used.

**TABLE 1**

| | |
|---|---|
| Equipment | Agilent, 1200 HPLC Chemstation |
| Column | Altima HP C18 HL (3.0 x 150mm) |
| Detector | Alltech, Evaporative Light Scattering Detector (ELSD) |
| Sample amount | 20 µl |
| Solvent | Acetonitrile:hexane/isopropyl alcohol |
| | Gradient solvent system |
| Detector gain | 1 |
| Detector oven temperature | 45°C |
| Carrier gas | N₂ (1.5 L/min) |

The triglyceride compositions of the fats obtained in Example 2 are illustrated in Table 2.
POP: 1,3-dipalmitoyl-2-oleoyl glycerol
POS: 1-palmitoyl-2-oleyl-3-stearoylglycerol
SOS: 1,3-distearoyl-2-oleoylglycerol

**TABLE 2**

| | **POP** | **POS** | **SOS** |
|---|---|---|---|
| Reaction substrate | **80.3** | **6.5** | **0.8** |
| Stirring transesterification | 27.6 | 51.1 | 15.6 |
| Continuous transesterification | 29.4 | 50.8 | 14.7 |

It was confirmed that the substrate had a POS content of 8.2% before reaction, and the fat obtained using the substrate via stirring transesterification had a POS content of 51.0 and an SOS content of 15.6. Also, the fat obtained through continuous transesterification had a POS content of 50.8% and an SOS content of 14.7%, which were similar to the result of stirring transesterification.

### Example 3: Crystallization-fractionation and removal

After enzymatic transesterification of Example 2, 1 kg of the enzymatically transesterified fat was completely dissolved at 60°C without separating the fatty acid and the fatty acid derivative, and the temperature of the solution was decreased to 20∼40°C, followed by stirring for 1 to 48 hours, crystallization and vacuum filtration, thereby separating a solid phase and a liquid phase.

The filtered liquid phase had a fat yield of 90% or higher, and fat containing 50 wt% or more of POS was obtained, from which the crystallized fat was removed. The properties of the fat from which the crystallized fraction was removed could be seen through analysis of melting point shown in the following Table 3.

**TABLE 3**

| | Composition of triglyceride (area%) | | | Melting point (°C) |
|---|---|---|---|---|
| | POP | POS | SOS | - |
| Before crystallization fractionation and removal | 29.4 | 50.8 | 14.7 | 40.4 |
| After crystallization fractionation and removal | 29.3 | 51.2 | 15.3 | 34.0 |

Measurement of the melting point was carried out using an automatic raising melting point tester EX-871. The sample was completely dissolved, filled to a height of about 1 cm in a capillary tube, put on a capillary tube support, and left in a freezer for about 10 minutes. Then, the sample was fixed to a sensor and was dipped into a bath containing distilled water at 10°C and the melting point was measured. The temperature was raised from 10°C to 25°C at a rate of 2°C/min, and was then raised at a rate of 0.5°C/min after 25°C. The conditions for measurement and analysis of the melting point using the automatic raising melting point tester are shown in the following Table 4.

**TABLE 4**

| | |
|---|---|
| Equipment | Automatic raising melting point tester EX-871 |
| Temperature increase rate | 0.5°C/min |
| Number of samples | 8 |
| Pretreatment condition | -5°C (10 min) |
| Detector | Specific photoelectric sensor detection |
| Heater | Specific coil-type heater 400 W |
| Stirrer | Variable speed type motor |

The analysis results of the triglyceride composition and the melting point of the fractionized fat, from which the fatty acid and the derivative thereof were not removed, are shown in Table 3. As a result of analysis of triglyceride, there was no great difference in essential components, *i.e.,* POP, POS and SOS. On the other hand, it could be confirmed from the measurement of the melting point that the fat before fractionation had a melting point of 40.4°C, while the fractionized fat had a melting point of 34.0°C, which demonstrated that a fraction having a high melting point was crystallized and removed.

### Example 4: Removal of fatty acid and fatty acid derivative

In this example, the fat obtained through crystallization fractionation and removal in Example 3 was distilled at 0.001 mbar and 250°C to remove stearic acid and a stearic acid derivative.

Through this process, fat having a high content (50% or higher) of POS could be produced.

### Experimental Example 2: Analysis of triglyceride content

In Experimental Example 2, the fat from which the stearic acid and the stearic acid derivative were removed in Example 4 was evaluated as to triglyceride composition using TLC-FID.

TLC-FID allows quantitative and qualitative analysis of an organic mixture separated by thin layer chromatography (TLC). In analysis, a high-purity reagent (Sigma Chemicals) was used as a solvent. About 1 µl of a sample dissolved in the solvent was spotted on a chromaload (quartz rod to which silica or alumina is thinly and securely applied at high temperature so that the sample is separated and developed) designed specifically for TLC-FID. The sample was developed in a tub containing a developing solvent for 20 minutes, followed by completely drying the solvent in a drying oven and analysis using TLC-FID. Analysis using TLC-FID was conducted under the conditions listed in Table 5.

**TABLE 5**

| | |
|---|---|
| TLC-FID equipment | IATRON IATROSCAN MK-5 |
| Detector | Flame ionization detector (FID) |
| | Frame photometric detector (FPD) |
| Sample amount | 1 *µ*ℓ |
| Flow rate of hydrogen gas | 160 ml/min |
| Flow rate of air | 2 ml/min |
| Scanning speed | 30 sec |

It could be seen from the analysis under these conditions that fat obtained in Example 4 had a triglyceride content of 98% or higher.

## Claims

1. A method of preparing fat containing 50 wt% or more of 1-palmitoyl-2-oleyl-3-stear.oyl glycerol, POS, comprising:
subjecting a raw material fat obtained by mixing palm oil or a fraction thereof containing 40 to 85 wt% of 1-palmitoyl-2-oleyl-3-palmitoyl glycerol, POP, with stearic acid and a stearic acid derivative at a molar ratio of 1:0.5 to 1:10 to enzymatic transesterification; wherein the enzymatic transesterification is carried out at 30 to 60°C using an enzyme extracted from Mucor miehei or Thermomyces lanuginosus;
removing a crystallized fraction obtained through single fractionation from the enzymatically transesterified fat, wherein removing the crystallized fraction comprises maintaining the fat solution, from which the stearic acid and the stearic acid derivative are not removed, at 0 to 40°C for 1 to 48 hours after enzymatic transesterification to separate a solid phase and a liquid phase, and removing the solid phase; and
removing the stearic acid and the stearic acid derivative from the fractionized fat.

2. The method according to claim 1, wherein, in the removal of the crystallized fraction, a triglyceride fractionation yield is 90 to 95 wt% and a content of POS in the composition of triglyceride is 50 wt% or more.

3. The method according to any one of claims 1 to 2, wherein the removing the fatty acid and the fatty acid derivative from the enzymatically transesterified fat is carried out at 0.001 to 30 mbar and 100 to 300°C.

## Patentansprüche

1. Verfahren zum Herstellen von Fett, das 50 Gew.-% oder mehr 1-Palmitoyl-2-Oleyl-3-Stearoyl-Glycerol, POS, enthält, umfassend:
Unterziehen eines Rohmaterialfetts, das durch Mischen von Palmöl oder einer Fraktion davon, die 40 bis 85 Gew.-% 1-Palmitoyl-2-Oleyl-3-Palmitoyl-Glycerol, POP, enthält, mit einer Stearinsäure und einem Stearinsäurederivat in einem Molarverhältnis von 1:0,5 bis 1:10 erhalten wird, einer enzymatischen Umesterung; wobei die enzymatische Umesterung bei 30 bis 60°C unter Verwendung eines Enzyms durchgeführt wird, das aus Mucor miehei oder Thermomyces lanuginosus extrahiert wurde;
Entfernen einer kristallisierten Fraktion, die durch Einzelfraktionierung aus dem enzymatisch umgeesterten Fett erhalten wurde, wobei das Entfernen der kristallisierten Fraktion das Halten der Fettlösung, aus der die Stearinsäure und das Stearinsäurederivat nicht entfernt wurden, bei 0 bis 40°C für 1 bis 48 Stunden nach der enzymatischen Umesterung aufweist, um eine Festphase und eine Flüssigphase zu trennen, und das Entfernen der Festphase; und
Entfernen der Stearinsäure und des Stearinsäurederivats aus dem umgeesterten Fett.

2. Verfahren nach Anspruch 1, wobei beim Entfernen der kristallisierten Fraktion ein Triglyceridfraktionierungsertrag 90 bis 95 Gew.-% ist und ein Gehalt von POS in der Zusammensetzung von Triglycerid 50 Gew.-% oder mehr ist.

3. Verfahren nach einem der Ansprüche 1 bis 2, wobei das Entfernen der Fettsäure und des Fettsäurederivats aus dem enzymatisch umgeesterten Fett bei 0,001 bis 30 mbar und 100 bis 300°C durchgeführt wird.

## Revendications

1. Procédé de préparation de matière grasse contenant 50 % en poids ou plus de 1-palmitoyl-2-oléyl-3-stéaroyl glycérol, POS, comprenant :
la soumission d'une matière grasse matière première obtenue en mélangeant de l'huile de palme ou une fraction de celle-ci contenant 40 à 85 % en poids de 1-palmitoyl-2-oléyl-3-palmitoyl glycérol, POP, avec de l'acide stéarique et un dérivé d'acide stéarique selon un rapport molaire de 1:0,5 à 1:10 à une transestérification enzymatique ; dans laquelle la transestérification enzymatique est effectuée à 30 à 60 °C en utilisant une enzyme extraite de Mucor miehei ou de Thermomyces lanuginosus ;
l'élimination d'une fraction cristallisée obtenue par fractionnement unique de la graisse transestérifiée par voie enzymatique, dans laquelle l'élimination de la fraction cristallisée comprend le maintien de la solution de matière grasse, à partir de laquelle l'acide stéarique et le dérivé d'acide stéarique ne sont pas éliminé, à 0 à 40 °C pendant 1 à 48 heures après la transestérification enzymatique pour séparer une phase solide et une phase liquide, et l'élimination de la phase solide ; et
l'élimination de l'acide stéarique et du dérivé d'acide stéarique de la graisse fractionnée.

2. Procédé selon la revendication 1, dans lequel, lors de l'élimination de la fraction cristallisée, un rendement de fractionnement en triglycérides est de 90 à 95 % en poids et une teneur en POS dans la composition de triglycérides est de 50 % en poids ou plus.

3. Procédé selon l'une quelconque des revendications 1 à 2, dans lequel l'élimination de l'acide gras et du dérivé d'acide gras de la graisse transestérifiée par voie enzymatique est effectuée à 0,001 à 30 mbar et 100 à 300 °C.
